Europäisches Patentamt

European Patent Office

Office européen des brevets

(11) Veröffentlichungsnummer: **0 196 624**
**B1**

(12) **EUROPÄISCHE PATENTSCHRIFT**

(45) Veröffentlichungstag der Patentschrift: 06.06.90

(21) Anmeldenummer: 86104196.0

(22) Anmeldetag: 26.03.86

(51) Int. Cl.⁵: **H 02 B 7/06, H 02 B 13/02**

(54) Kleinstation.

(30) Priorität: 02.04.85 DE 3511962

(43) Veröffentlichungstag der Anmeldung:
08.10.86 Patentblatt 86/41

(45) Bekanntmachung des Hinweises auf die
Patenterteilung:
06.06.90 Patentblatt 90/23

(84) Benannte Vertragsstaaten:
AT BE CH DE FR LI

(56) Entgegenhaltungen:
DE-A-2 527 612
FR-A- 593 668
FR-A-1 428 544

(73) Patentinhaber: Betonbau GmbH
Schwetzinger Strasse 22-26
D-6833 Waghäusel (DE)

(72) Erfinder: Müller, Gervin
Fridolinstrasse 19
D-6833 Waghäusel (DE)

(74) Vertreter: Hiebsch, Gerhard F., Dipl.-Ing.
Hiebsch & Peege Patentanwälte Postfach464
Erzbergerstrasse 5a
D-7700 Singen 1 (DE)

Courier Press, Leamington Spa, England.

**Beschreibung**

Die Erfindung betrifft eine Kleinstation nach dem Oberbegriff des Patentanspruches 1. Eine derartige Kleinstation ist durch die FR—A—1 428 544 bekannt.

Kleinere elektrische Netzstationen, die sich besonders für die Aufstellung an Verbraucherschwerpunkten eignen, werden seit längerer Zeit als nicht begehbare Kompaktstationen, sogenannte Kleinstationen, ausgeführt. Die bekannten Kleinstationen weisen bevorzugt ein Gehäuse aus Leichtbeton auf, das mit wetterfesten Stahlblechteilen für die Belüftungswände, das Dach und die Türen kombiniert ist. Sie sind relativ teuer in der Herstellung, weisen ein hohes Eigengewicht auf und erfordern besondere Vorkehrungen für die gefahrlose Ableitung von Explosionsdruckwellen aus dem Gebäudeinneren an die Außenumgebung. Hinzu kommt, daß das Betongehäuse dieser Kleinstationen zunehmend auf Ablehnung stößt, weil es vielerorts ästhetisch stört. Daß Beton kein unverwüstlicher Werkstoff ist, wie lange Zeit angenommen wurde, haben neuere Erfahrungen gezeigt.

Es sind auch bereits Stationsgebäude in Metall- oder Kunststoffbauweise bekannt, die ein Rahmengestell aus C-oder L-Profilen aufweisen. Diese Gebäude haben jedoch eine zu geringe Stabilität, so daß sie sich als explosionsgefährdete Netzstation-Gebäude nicht bewährt haben.

Durch die moderne Schalttechnik—SF₆- und Vakuumtechnik—sind die Sicherheitsanforderungen an derartige Stationsgebäude wesentlich geringer geworden. Die SF₆- Schalter erfordern nur noch 10% der Wartung der derzeit verwendeten Schalter. Die Außenabmessungen der Gebäude können aufgrund der geringeren Abmessungen der modernen Schaltgeräte weiter reduziert werden.

Der vorliegenden Erfindung liegt deshalb die Aufgabe zugrunde, ein neues Konstruktionsprinzip für derartige Kleinstationen zu entwickeln, das die obengenannten *neuen Forderungen* an Kleinstationen berücksichtigt und zu stabileren, preiswerteren, vielseitig abwandelbaren Stationen führt, deren Äußeres ohne zusätzliche Aufwendungen dem jeweiligen Aufstellungsort angepaßt werden kann.

Diese Aufgabe wird erfindungsgemäß durch die kennzeichnenden Merkmale des Patentanspruches 1 gelöst. Der Gebäudekorpus aus dem Rahmenwerk hat gegenüber den konventionellen Betongebäuden vielerlei Vorteile: er hat ein wesentlich leichteres Gewicht, weist eine hohe Eigensteifigkeit auf, die Verkleidung und Ausfachung des Rahmenwerkes kann dem jeweiligen Verwendungszweck und *Einsatzort schnell* und preiswert angepaßt werden. Ebenso sind die Außenabmessungen der Station und die Aufteilung ihres Innenraumes ohne Schwierigkeiten zu variieren, die Befestigung der Zwischenwände, Geräte und sonstigen Installationen erfordert keine zusätzlichen Vorkehrungen, das Verhältnis von Innenabmessungen zu Außenabmessungen ist extrem günstig. Gegenüber den vorbekannten Rahmengestellen aus Schienen besitzt der Gebäudekorpus der erfindungsgemäßen Kleinstation eine erheblich gesteigerte Stabilität aufgrund der vorgesehenen Vierkantrohre, die gleichzeitig für die Be- und Entlüftung und die Druckentlastung des Gebäudeinneren benutzt werden, so daß die hierfür bei den bekannten Stationsgebäuden vorgesehenen Einrichtungen eingespart werden können. Der Grundrahmen sowie der oben liegende Rahmen sind als Rundumzu- und. -abluft ausgebildet.

Die Außenverkleidung des Rahmenwerkes besteht vorzugsweise aus Aluminiumprofilen, profiliertem Aluminiumblech, Blechen, Kunststoff-Beton, Glasfaser-Beton oder Holzplatten. Es ist jedoch auch möglich, als Außenverkleidung einen Verputz an das mit Blech verkleidete oder mit Leichtbeton, Beton oder Kunstharzbeton ausgefachte Rahmenwerk anzubringen. Im letzteren Fall sind Einlagen von Baustahlgewebe zweckmäßig.

Türen für Transformatoren und Lüftungen an den beiden Längswänden können bei dieser Kleinstation entfallen, da das Dach klappbar ausgeführt ist, so daß ein Zugang zu dem Transformator von oben möglich ist. Das Dach kann ein- und mehrteilig entsprechend den Detailfunktionen der Netzstationen ausgebildet sein. Das aufklappbare Dach über dem Transformator ist gegebenenfalls mit einer tiefer gezogenen Schürze zu versehen. Durch den Wegfall der seitlichen Lüftungstüren ist eine wirtschaftlichere, optisch freizügigere Lösung mit geringerem Bedarf an Vorhalteflächen um die Station möglich.

Das Rehmenwerk der erfindungsgemäßen Kleinstation erfüllt also mehrere Funktionen gleichzeitig: es hat eine statische Aufgabe zur Sicherung der Eigensteifigkeit der Station, es dient als Träger für die installierten Geräte, es garantiert eine sichere Erdung an jedem Ort der Station, es sichert eine gefahrlose Entlüftung und Druckentlastung, es dient als Verkleidungsträger für beliebige Außenverkleidungen und es läßt Querverbindungen innerhalb der Station zur Befestigung von Zwischenwänden, Aggregaten und MS- und NS-Kabeln zu.

Die Erfindung wird nachfolgend anhand von mehreren in der Zeichnung dargestellten Ausführungsbeispielen näher beschrieben und erläutert.

Es zeigen:

Figur 1: das Rahmenwerk einer Kleinstation mit Grundrahmen bzw. Betonfundamentwanne und *abgenommenen* oberen Querstreben als Bestandteil *eines* Daches in perspektivischer Darstellung;

Figur 2: einen Längsschnitt durch die Kleinstation gemäß Figur 1 mit Außenverkleidung und geöffnetem Dach über dem Transformator und im Rahmenwerk einmontierten MS- und NS-Geräten:

Figur 3: den aus dem Erdreich ragenden Teil der Kleinstation gemäß Figur 2 in perspektivischer Darstellung mit dreigeteilten Dach- und Längswänden ohne Lüftungstüren oder Lüfter-Elemente;

Figur 4 bis 6: Detaildarstellungen der Rundum-Be- und Entlüftung durch Vierkantrohre des Rahmenwerkes gemäß Figur 1;

Figur 7 und 8: vergrößerte Ausschnittdarstellungen der Außenwandverkleidungen der Kleinstation in perspektivischer Darstellung mit integrierter Druckentlastung und Lüftung;

Figur 9: ein Beispiel für die unter dem Dach liegende Entlüftung einer Kleinstation mit Betonausfachung;

Figur 10 und 11: Querschnitte durch die Kleinstation gemäß Figur 2 und 3 mit unterschiedlichen Lösungen für die Be- und Entlüftung sowie Druckentlastung entsprechend Figur 7 und 8 des Gebäudeinneren;

Figur 12: einen Ausschnitt aus dem Rahmenwerk gemäß Figur 1 mit Bewehrung, Betonausfachung und außenseitigem Verputz;

Figur 13: die Verbindung zweier senkrecht zueinander verlaufender C-Profilschienen im Rahmenwerk gemäß Figur 1 in perspektivischer Darstellung und

Figur 14: einen Querschnitt durch eine der beiden C-Profilschienen gemäß Figur 13.

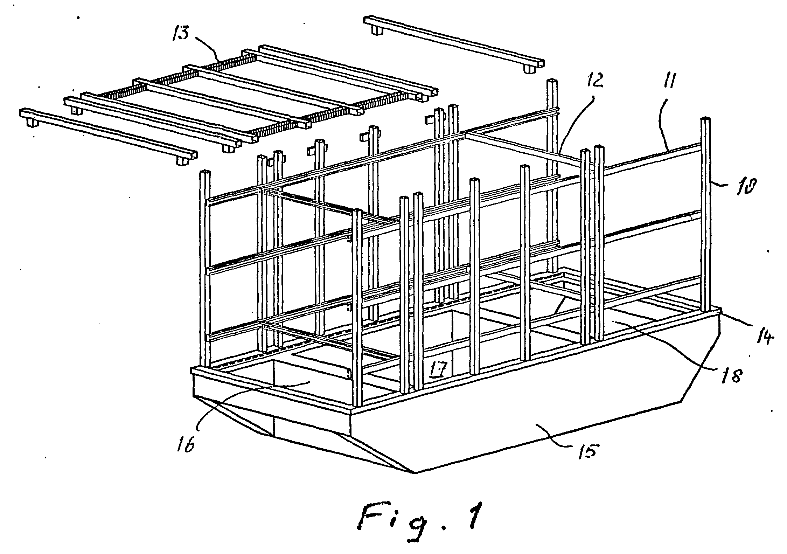

Das Rahmenwerk gemäß Figur 1 einer Kleinstation besteht aus senkrecht verlaufenden Vierkantrohren 10 und waagerecht verlaufenden C-Profilschienen 11, die ihrerseits durch querverlaufende C-Profilschienen 12 zur Querausteifung des Rahmenwerkes verbunden sind. Die obersten und untersten waagerecht verlaufenden Schienen 13 und 14, die zum äußeren Rahmen des Rahmenwerkes gehören, sind ebenfalls Vierkantrohre, die Ausstanzungen oder Ausschnitte aufweisen beziehungsweise mindestens teilweise aus Lochblech oder Baustahlgewebe bestehen, so daß durch sie die Be- und Entlüftung des Inneren der Kleinstation geführt werden kann. Die oberen querverlaufenden Vierkantrohre 10, die in der Zeichnung im abgenommenen Zustand dargestellt sind und auf das restliche Rahmenwerk aufsteckbar sind, sind Bestandteil des die Kleinstation nach oben abschließenden Daches, das bei den später beschriebenen Ausführungsbeispielen dargestellt ist.

Das Rahmenwerk ist auf einem Grundrahmen 15, der in diesem Ausführungsbeispiel in Form einer Bodenwanne ausgebildet ist, befestigt, die in drei Segmente unterteilt ist: ein vorderes Segment 16, über dem sich der Niederspannungsraum der Kleinstation erstreckt, ein mittleres Segment 17 für den Transformatorenraum mit einer geschlossenen Wanne zum Auffangen des Transformatorenöls und ein hinteres Segment 18, über dem der Hochspannungs- oder Mittelspannungsraum angeordnet ist. Die Rastung der Vierkantrohre 10 richtet sich nach der Breite dieser drei Segmente 16 bis 18, so daß auch das Dach der Kleinstation diesen Segmentbreiten entsprechen kann.

Der Grundrahmen 15 ist zweckmäßigerweise aus Beton gegossen; er kann aber auch aus Kunststoff oder Blech hergestellt sein, wenn es darauf ankommt, das Gewicht der Kleinstation auf ein Minimum zu reduzieren.

Die C-Profilschienen 11 und 12 des Rahmenwerkes dienen zweckmäßigerweise gleichzeitig als Befestigungsschienen für Zwischenwände, MS- und NS-Schaltgeräte und sonstige Installationen der Kleinstation und bieten die Möglichkeit einer gesicherten Erdung in allen Bereichen der Kleinstation.

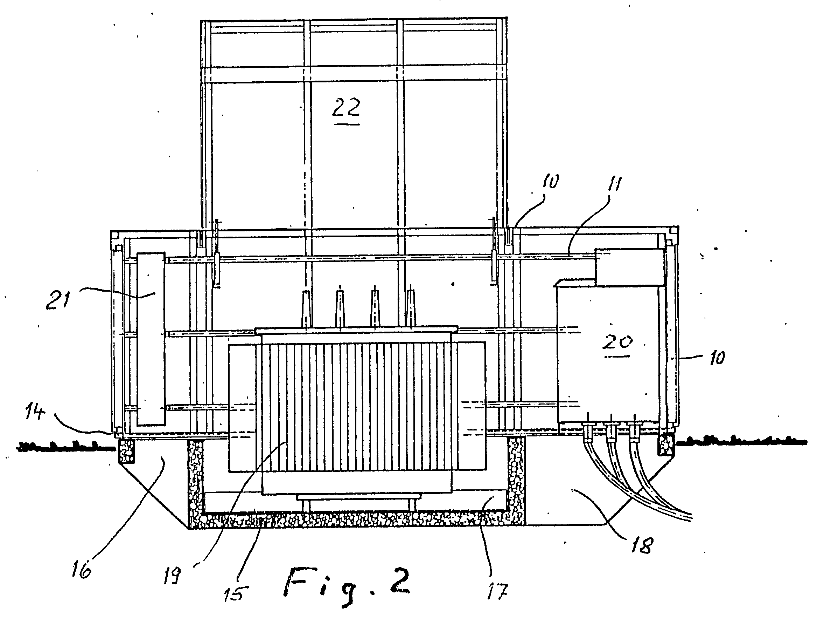

In Figur 2 ist die Kleinstation in installiertem Zustand mit aufgeklappten Dach über dem Traforaum im Längsschnitt dargestellt. Mit 19 ist der Transformator, mit 20 die Mittelspannungschaltanlage und mit 21 die Niederspannungsschaltanlage bezeichnet. Letztere sind im oberen Rahmenwerk einmontiert und können mit dem Rahmenwerk als Chassis transportiert werden. Das Dach 22 über dem Transformatorenraum 17 ist schwenkbar an den senkrecht oder waagerecht verlaufenden Vierkantrohren 10 gelagert.

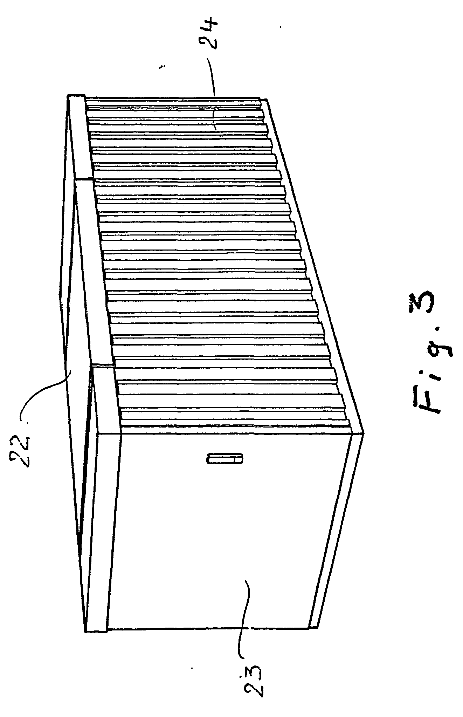

Figur 3 zeigt eine perspektivische Gesamtansicht des aus dem Erdreich ragenden Teiles der Kleinstation, wobei die Außenwände der Kleinstation durch Aluminiumtüren 23 bzw. Aluminiumbleche, Aluminiumprofile oder Blechtrapezprofile 24 verkleidet sind. Durch den Wegfall von Lüftungstüren in den Längswänden 24 der Kleinstation infolge der Verlagerung des Zuganges zum Traforaum in die Dachebene wird eine größere Freizügigkeit hinsichtlich der Gestaltung und Installation der Netzstation im Bereich der Längswände erreicht.

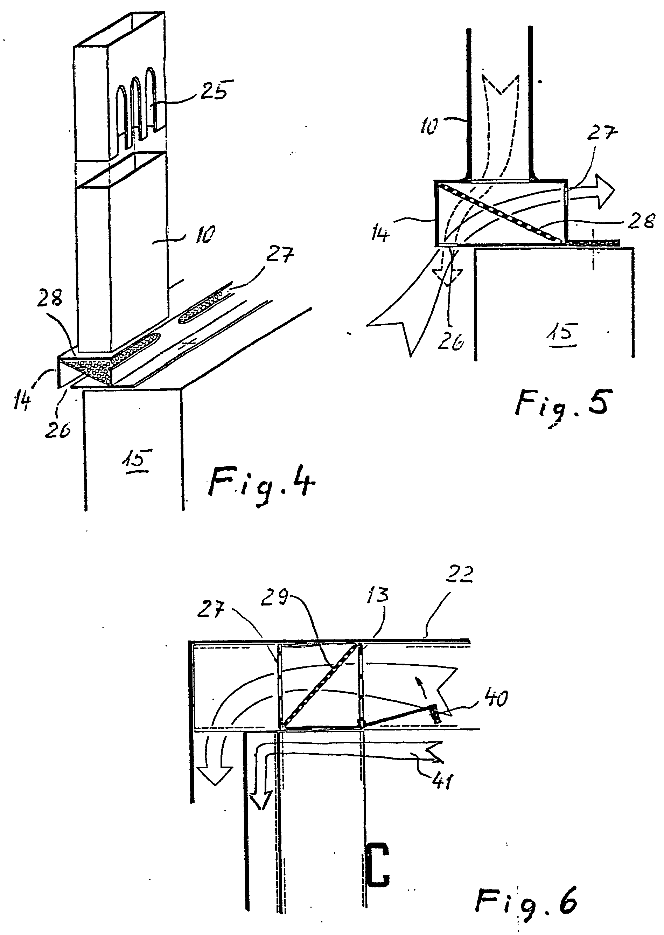

Figur 4 zeigt ein senkrecht im Rahmenwerk verlaufendes Vierkantrohr 10, das zusammen mit dem untersten waagerecht verlaufenden Vierkantrohr 14 das Be- und Entlüftungssystem für die Kleinstation bildet. Das senkrecht verlaufende Vierkantrohr 10 weist in seinem oberen Bereich Durchbrüche 25 auf, die in das Innere der Kleinstation weisen. Das untere Ende des Vierkantrohres 10 ist so mit dem waagerecht verlaufenden Vierkantrohr 14 verschweißt, daß ein ungehinderter Luftstrom durch das Innere der beiden Rohre gewährleistet ist, wie mit dem gestrichelten Pfeil in Figur 5 angedeutet ist. Das waagerecht verlaufende Vierkantrohr 14 ragt mit seiner unteren Fläche über den Grundrahmen 15 der Kleinstation nach außen vor, so daß durch die in diesem Teilbereich der Grundfläche des Vierkantrohres 14 vorgesehenen Öffnungen 26 die Zu- und Abluft rundum ein- bzw. austreten kann. Schließlich sind auch in der in das Stationsinnere weisenden Seitenfläche des Vierkantrohres 14 Durchbrüche 27 vorgesehen, durch die vornehmlich die Frischluft in die Kleinstation strömen kann, wie mit dem Pfeil in Figur 5 angedeutet ist. Durch die Zuführung der Frischluft im unteren Bereich des Stationsinneren und die Abfuhr der erwärmten Luft in oberen Bereich des Stationsinneren wird eine optimale Lüftung und Kühlung der Kleinstation erreicht.

Um ein Eindringen von Kleintieren und grobem Schmutz durch die Lüftungsöffnungen 26 und 27 in das Stationsinnere zu verhindern, ist in das Vierkantrohr 14 ein diagonal liegendes Lochblech 28 eingeschoben.

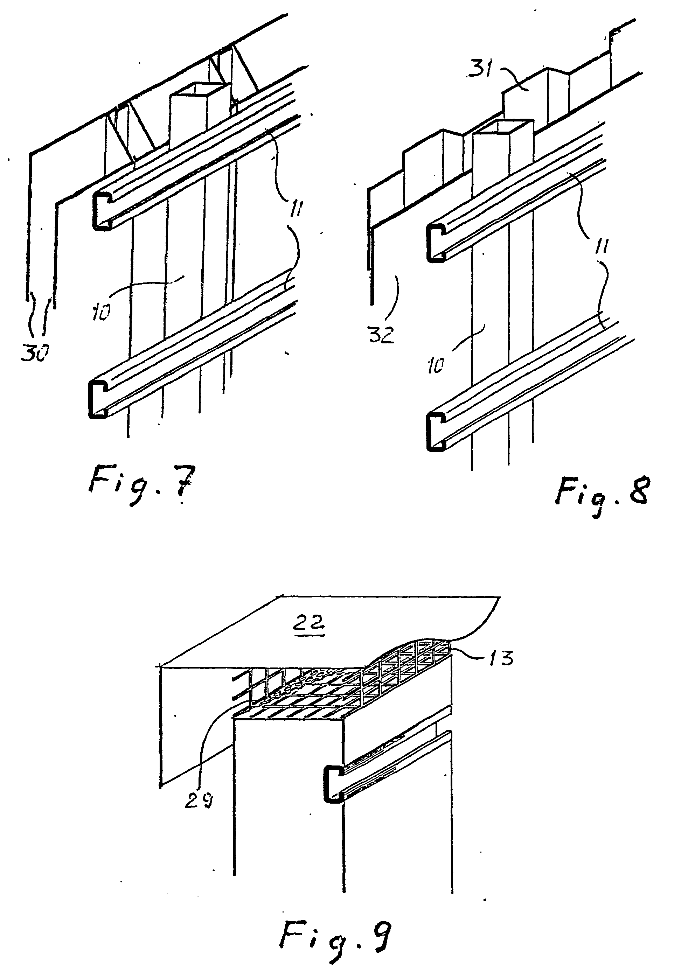

Eine gleichwirkende Entlüftungsvorrichtung im oberen Bereich der Kleinstation ist in den Figuren 6 und 9 dargestellt. Hier besteht das unmittelbar unter dem Dach 22 waagerecht verlaufende Rohr aus einem perforierten Vierkantrohr 13, in das ebenfalls ein diagonal verlaufendes Lochblech 29 eingeschoben ist. Die Abluft der Kleinstation wird, wie in Figur 6 mit dem Pfeil angedeutet, durch das die Seitenwände der Station überragende und nach unten abgewinkelte Dach 22 zum Boden geleitet.

Im Störlichtbogenfall verschließen selbsttätig schwenkbare Lamellen 40 die Rundumentlüftung und erlauben der Druckwelle somit nur noch den Weg über die Aluminium-Hohlprofile bzw. Kanäle zwischen den Blechen und dem Profilblech, so daß die heißen Gase auf dem verlängerten, mit einem Pfeil 41 gekennzeichneten Weg stark abgekühlt werden und nur im unteren Bereich der Station nahe am Erdboden austreten können.

Figur 7 und 8 zeigen zwei Ausführungsbeispiele der Außenverkleidung des Rahmenwerkes mit ebenen Blechtafeln 32 und Trapezblechen 31 bzw. mit Aluminiumhohlprofilen 30 mit integrierter störlichtbogensicherer Zu- und Abluft bzw. Druckentlastungskanälen. An den vertikal verlaufenden Vierkantrohren 10 des Rahmenwerkes ist zunächst eine ebene Tafel 32 aus Aluminium, Stahlblech oder einem Kunststoff befestigt. An dieser Tafel 32 sind dann die äußeren Verkleidungsplatten 31 befestigt, so daß Lüftungskanäle bzw. Druckentlastungskanäle wie im Fall der Aluminiumhohlprofile 30 entstehen. Die Ein- bzw. Ausströmung erfolgt dadurch, daß die innenliegende Verkleidungsteile in der Höhe niedriger ausgebildet sind als die außenliegenden.

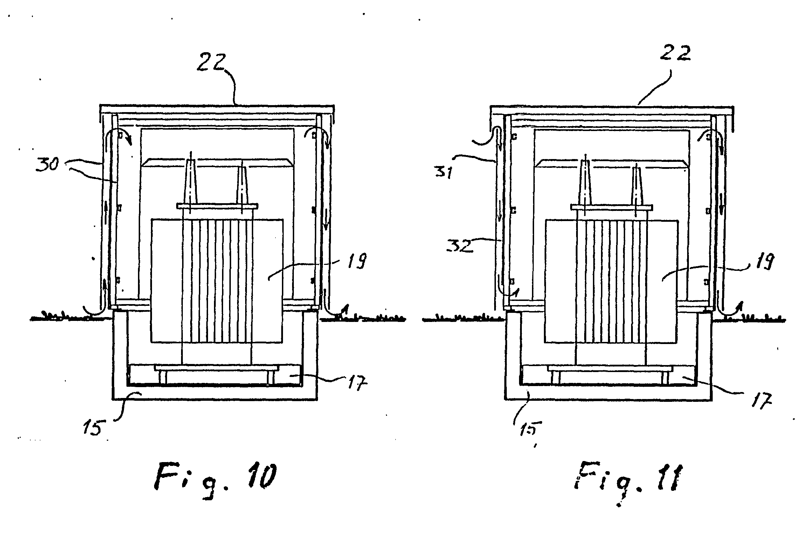

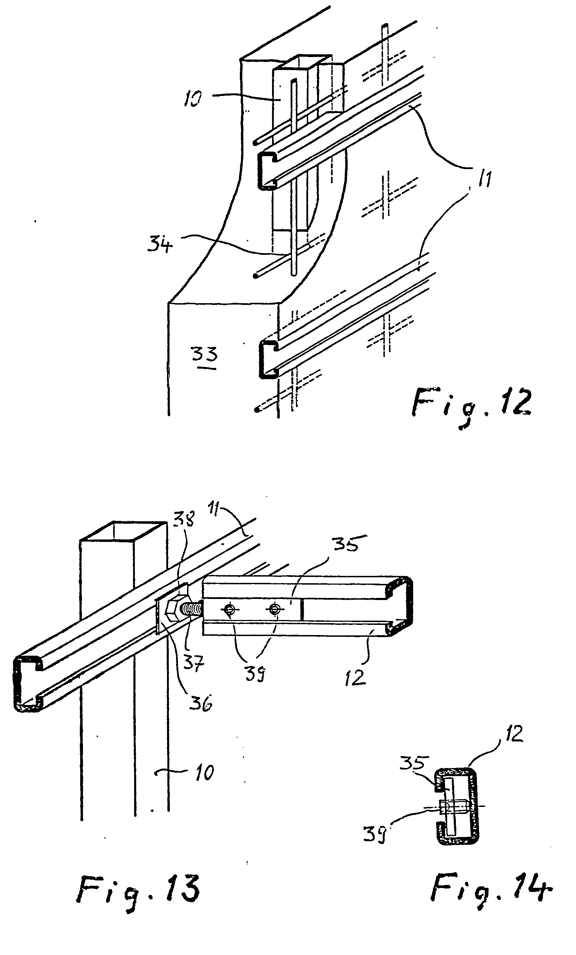

Wie aus den Figuren 10 und 11 hervorgeht, wird durch die Lüftungskanäle zwischen den Platten 32 und 31 die Zu- und Abluft für das Innere der Kleinstation geführt, und zwar je nach Anordnung der äußeren Verkleidungsplatten 30 bzw. 31 so, daß die Zuluft unten in den Lüftungskanal eintritt und oben dem Stationsinneren zugeführt wird (Figur 10) oder umgekehrt (Figur 11). Im Störlichtbogenfall entweicht die Druckwelle nach Verschließen der Rundumentlüftung entweder über die Zuluftschlitze im unteren Bereich der Station oder, und zwar der größere Teil wegen des Auftriebes von heißen Gasen, durch die oberen Einlaßöffnungen der Lüftungskanäle.

Das Rahmenwerkteilstück gemäß Figur 12 ist mit Beton 33 ausgefacht, dessen Festigkeit durch eine Bewehrung 34 erhöht wird. Die vertikal verlaufenden Vierkantrohre 10 und die waagerecht verlaufenden C-Profilschienen 11 liegen ebenfalls in der Betonwand 33. Die Außenseite der Kleinstation weist einen in der Zeichnung nicht dargestellten Verputz auf. Diese Ausfachung des Rahmenwerkes mit Beton stellt eine Alternative zu den Verkleidungslösungen der Kleinstation mit Blechplatten germäß Figur 7 und 8 dar. Selbstverständlich lassen sich beide Lösungen auch kombinieren, beispielsweise in der Art. daß die in eine Böschung gestellte Hinterwand und die Seitenwände mit Betonausfachung ausgeführt sind, während die frei liegende Vorderwand mit Profilplatten verkleidet ist.

Figur 13 zeigt eine zweckmäßige Art der Verbindung zweier senkrecht zueinander verlaufender C-Profilschienen 11 und 12 um Rahmenwerk. Die Verbindung erfolgt durch einen Zuganker, der zwei im rechten Winkel zueinander angeordnet Blechstreifen 35 und 36 aufweist, die durch eine Hammer- bzw. Hakenkopfschraube 37 mit Kontermutter 38 kraftschlüssig miteinander verbunden sind. Der Blechstreifen 35 wird in die C-Profilschiene 12 eingeschoben und dort mit Druckschrauben 39 festgelegt, deren Kopf nicht über das C- Profil der Schiene 12 hinausragt. Die Hammer- oder Hakenkopfschraube 37 wird in das C- Profil der anderen Schiene 11 eingeführt und mittels der Kontermutter 38 dort festgelegt. Auf diese einfache Weise ist es möglich, querverlaufende C-Profilschienen 11 und 12 an jeder beliebigen Stelle der zum Rahmenwerk gehörenden C-Profilschienen zur Befestigung von Zwischenwänden, Aggregaten oder Installationen in der Kleinstation anzubringen ohne Behinderung oder Platzinanspruchnahme durch vorstehende Verbindungsteile. Dadurch wird eine hohe Flexibilität in der Unterteilung und Einrichtung des Stationsinneren erreicht.

**Patentansprüche**

1. Kleinstation, insbesondere elektrische Netzstation mit einem Hochspannungs-, Transformator- und Niederspannungsraum in Fertigbauweise, dessen Gebäudekorpus aus einem Grundrahmen (15) beziehungsweise Betonfundamentteil und einem aus Schienen (10—14) zusammengesetzten Rahmenwerk besteht, dadurch gekennzeichnet, daß mindestens die den äußeren Rahmen des Rahmenwerkes bildenden Schienen (10, 13, 14) Vierkantrohre sind, durch die die Rundumbe- und entlüftung und Druckentlastung des Gebäudeinneren nach außen erfolgt, und daß die zwischen den Vierkantrohren waagerecht verlaufenden, die Fächer des Rahmenwerkes bildenden Schienen (11, 12) ein C-Profil besitzen, daß die Schienen des Rahmenwerkes gleichzeitig als Befestigungsschienen für Zwischenwände, MS- und NS-Schaltgeräte und sonstige Installationen der Kleinstation dienen, daß die Fächer des Rahmenwerkes mit einem wärmedämmenden Baustoff ausgefacht sind, daß an dem Rahmenwerk, das auf dem Grundrahmen (15) beziehungsweise Betonfundamentteil befestigt ist, eine Außenverkleidung (30 bis 33) und ein oder mehrere Dächer (22) angebracht sind und daß der Grundrahmen beziehungsweise das Betonfundamentteil und das Rahmenwerk miteinander mechanisch verbunden sind.

2. Kleinstation nach Anspruch 1, dadurch gekennzeichnet, daß als Baustoff für das Ausfachen hartgeschäumter Kunststoff, Beton oder Leichtbeton dient.

3. Kleinstation nach Anspruch 1 oder 2, dadurch gekennzeichnet, daß als Außenverkleidung Platten (30 bis 32) aus Beton, Strukturbeton, Leichbeton, Kunststein, Kunststoff, Glasfaserbeton, Stahlblech, Holz oder Aluminium oder Aluminiumprofiltafeln bzw. Hohlprofilen an dem Rahmenwerk befestigt sind.

4. Kleinstation nach Anspruch 1 oder 2, dadurch gekennzeichnet, daß als Außenverkleidung ein Verputz an dem Rahmenwerk angebracht ist.

5. Kleinstation nach einem der vorhergehenden Ansprüche, dadurch gekennzeichnet, daß die Eckverbindungen der C-Profilschienen (11, 12) durch einen Zuganker (35 bis 38) verbunden sind, wobei die Arretierung des Zugankers im C-Profil durch Schrauben (39) erfolgt, deren Kopf nicht über das C-Profil hinausragt.

6. Kleinstation nach Anspruch 5, dadurch gekennzeichnet, daß die untere dem Dach (22) verlaufenden waagerechten Vierkantrohre (13) des äußeren Rahmens mindestens an den nach innen und außen weisenden Seitenflächen Lüftungsschlitze oder -löcher aufweisen.

7. Kleinstation nach Anspruch 5 oder 6, dadurch gekennzeichnet, daß die auf dem Grundrahmen (15) verlaufenden waagerechten Vierkantrohre (14) des äußeren Rahmens nach außen über die Bodenplatte hinausragen und daß in dem überragenden Teil der nach unten weisenden Fläche des Vierkantrohres Lüftungsschlitze (26) sowie in das Stationsinnere weisende Lüftungsschlitze (27) vorgesehen sind.

8. Kleinstation nach Anspruch 6 oder 7, dadurch gekennzeichnet, daß in die waagerecht verlaufenden Vierkantrohre (14) diagonal ein Lochblech (28) eingelegt ist.

9. Kleinstation nach einem der Ansprüche 6 bis 8, dadurch gekennzeichnet, daß die Lüftungsschlitze (27) zumindest an einer Seitenfläche des Vierkantrohres (13) durch schwenkbar am Vierkantrohr angelenkte Lamellen (40) abdeckbar sind, die im Störlichtbogenfall selbsttätig schließen.

10. Kleinstation nach einem der vorhergehenden Ansprüche, dadurch gekennzeichnet, daß die Druckentlastung und Be- und Entlüftung des Stationsinneren durch die als Hohlwand ausgebildete Außenverkleidung (30 bis 33) erfolgt.

11. Kleinstation nach einem der vorhergehenden Ansprüche, dadurch gekennzeichnet, daß der Zugang zum Transformatorenraum ausschließlich über das Dach (22) oder die Dächer erfolgt, das bzw. die klappbar ausgebildet ist bzw. sind.

**Revendications**

1. Petit poste électrique, notamment poste-réseau électrique avec un local à haute tension, de transformateur et à basse tension d'une construction à l'aide d'unités de montage, dont le claustre consiste dans un cadre de base (15) ou bien dans une fondation en béton et un cadre composé de rails (10—14), caractérisé en ce que au moins les rails (10, 13, 14) formant le cadre extérieur du cadre complet sont des tuyaux carrés par lesquels est réalisée l'aération complète et la détente de pression de l'intérieur du bâtiment à l'extérieur et que les rails (11, 12) se trouvant de manière horizontale entre les tuyaux carrés et constituant les travées du cadre complet possèdent un profilé en C, que les rails du cadre complet servent en même temps en tant que rails de fixation pour des parois de séparation, des appareillages électriques à moyenne et à basse tension et d'autres installations du petit poste électrique, que les travées du cadre sont remplies de matériaux calorifuges, que sur le cadre complet qui est fixé sur le cadre de base (15) ou bien la fondation en béton est installé un parement (30 à 33) et un ou plusieurs toits (22) et que le cadre de base ou bien la fondation en béton et le cadre complet sont liés mécaniquement.

2. Petit poste électrique selon la revendication 1 caractérisé en ce que est utilisée de la matière synthétique en mousse dure, du béton ou du béton léger en tant que matériau de construction pour le remplissage des travées.

3. Petit poste électrique selon la revendication 1 ou 2 caractérisé en ce que au cadre complet sont fixées en tant que parement des plaques (30 à 32) en béton, en béton structure, en béton léger, en pierre artificielle, en béton à fibres de verre, en tôle d'acier, en bois, ou en aluminium ou des plaques de profilés d'aluminium ou bien des profilés creux.

4. Petit poste électrique selon la revendication 1 ou 2 caractérisé en ce qu'il y a un crépi au cadre complet en tant que parement.

5. Petit poste électrique selon une des revendications précédentes caractérisé en ce que les assemblages d'angle des rails en profilés C (11, 12) sont liés moyennant un tirant d'ancrage (35 à 38), l'arrêtage du tirant d'ancrage se faisant dans le profilé C par des vis (39) dont la tête ne désaffleure pas le profilé C.

6. Petit poste électrique selon la revendication 5 caractérisé en ce que les tuyaux carrés horizontales (13) du cadre extérieur se trouvant sous le toit (22) possèdent au moins aux faces latérales vers l'intérieur et vers l'extérieur des grilles ou des trous d'aération.

7. Petit poste électrique selon la revendication 5 ou 6 caractérisé en ce que les tuyaux carrés horizontales (14) du cadre extérieur se trouvant sur le cadre de base (15) désaffleurent la plaque de base vers l'extérieur et que dans la partie en saillie de la face vers le bas du tuyau carré sont prévus des grilles d'aération (26) ainsi que les grilles d'aération (27) vers l'intérieur du poste.

8. Petit poste électrique selon la revendication 6 ou 7 caractérisé en ce que dans les tuyaux carrés horizontales (14) est mis—de manière diagonale—une tôle perforée (28).

9. Petit poste électrique selon une des revendications 6 à 8, caractérisé en ce que les grilles d'aération (27) sont recouvrables au moins sur une face latérale du tuyau carré (13) moyennant des lamelles (40) fixées de manière mobiles au tuyau carré qui se ferment automatiquement en cas de arc électrique parasitaire.

10. Petit poste électrique selon une des revendications précédentes, caractérisé en ce que la détente de pression et l'aération de l'intérieur du poste est réalisée par le parement (30 à 33) formé comme mur creux.

11. Petit poste électrique selon une des revendications précédentes caractérisé en ce que l'accès au local de transformateur n'est possible qu'à travers le toit (22) ou les toits qui est/sont rabattable(s).

## Claims

1. Small station, especially electric power station having a high voltage room, a transformer room and a low voltage room in prefabricated construction, the fabric of which consists of a base frame (15) or concrete foundation and of a frame made of bars (10—14), characterized in that at least those bars (10, 13, 14) forming the outer part of the frame are rectangular tubes through which the interior of the structure is fully aerated and deaerated and relieved from pressure outwards, and that the bars (11, 12) running horizontally between the rectangular tubes and forming the compartments of the frame have a C-profile, that the bars of the frame simultaneously serve as fastening bars for parting walls, mean or low voltage switchgears and for other installations of the small station, that the compartments of the frame are filled with a heat insulator, that a facing (30 to 33) and one or several roofs (22) are attached to the frame, which is fixed to the base frame (15) or concrete foundation, and that the base frame or concrete foundation and the frame are connected mechanically.

2. Small station according to Claim 1, characterized in that rigid expanded synthetic material, concrete or lightweight concrete is used as building material for the filling out.

3. Small station according to Claim 1 or 2, characterized in that plates (30 to 32) made of concrete, structural concrete, lightweight concrete, artificial stone, plastics, glass fibre concrete, sheet steel, tiber or aluminum, or aluminum profile plates and hollow sections respectively are attached to the frame as outer facing.

4. Small station according to Claim 1 or 2, characterized in that as facing a roughcast is applied to the frame.

5. Small station according to one of the proceding claims, characterized in that the corner connections of the C-profile bar (11, 12) are connected by means of a tie rod (35 to 38), with the latter being arrested in the C-profile by means of screws (39), the heads of which do not project over the C-profile.

6. Small station according to Claim 5, characterized in that the horizontal rectangular tubes (13) running under the roof (22) of the outer frame show ventilating grooves or ventiducts at least at the side faces showing inwards and outwards.

7. Small station according to Claim 5 or 6, characterized in that the horizontal rectangular tubes (14) of the outer frame running on the base frame (15) project outwards over the plate and that there are provided ventilating grooves (26) in the projecting part of the surface showing downwards of the rectangular tube and ventilating grooves (27) directing towards the interior of the station.

8. Small station according to Claim 6 or 7, characterized in that in the horizontal rectangular tubes (14) a perforated plate (28) is inserted diagonally.

9. Small station according to one of the Claims 6 to 8, characterized in that the ventilating grooves (27) can be covered at least on one side face of the rectangular tube (13) by means of pivoted lamella (40) fixed to the rectangular tube which close automatically in the case of an electric arc interference.

10. Small station according to one of the proceding claims, characterized in that the interior of the structure is aerated and deaerated and relieved from pressure by means of the facing (30 to 33) in the form of a hollow wall.

11. Small station according to one of the proceding claims, characterized in that the transformer room is only accessible via the roof (22) or the roofs, which is/are hinged.

Fig. 1

Fig. 2

Fig. 3

Fig.4

Fig.5

Fig.6

Fig. 7

Fig. 8

Fig. 9

Fig. 11

Fig. 10

Fig.12

Fig.13

Fig.14